# EUROPEAN PATENT APPLICATION

(11) **EP 4 415 411 A1**
(43) Date of publication of application: **14.08.2024**
(21) Application number: 22886125.8
(22) Date of filing: 28.10.2022
(51) Int. Cl.: H04W 24/02

(54) **WIRELESS SIGNAL PROCESSING METHOD, CONTROLLED DEVICE, TERMINAL, RELAY DEVICE, CONTROL DEVICE, ELECTRONIC DEVICE AND COMPUTER-READABLE STORAGE MEDIUM**

(30) Priority: 29.10.2021 CN 202111275007
(71) Applicant: ZTE Corporation, Shenzhen, Guangdong 518057 (CN)
(72) Inventor: WANG, Yuxin, Shenzhen, Guangdong 518057 (CN); LU, Zhaohua, Shenzhen, Guangdong 518057 (CN); LI, Yong, Shenzhen, Guangdong 518057 (CN); DOU, Jianwu, Shenzhen, Guangdong 518057 (CN); YANG, Jun, Shenzhen, Guangdong 518057 (CN); CHEN, Yijian, Shenzhen, Guangdong 518057 (CN)
(74) Representative: Canzler & Bergmeier Patentanwälte Partnerschaft mbB
(86) International application number: PCT/CN2022/128258
(87) International publication number: WO 2023/072250

(57) **Abstract**

The present application relates to the technical field of communications. Provided are a wireless signal processing method, a controlled device, a terminal, a relay device, a control device, an electronic device and a computer-readable storage medium. The wireless signal processing method comprises: acquiring configuration information, wherein the configuration information is information that is determined by a control device on the basis of frequency band information, which is supported by the current device, and running state information, which is reported by the current device; and adjusting an operation mode of the current device according to the configuration information, wherein the operation mode corresponds to a propagation direction of a feedback beam.

## Description

### CROSS-REFERENCE TO RELATED APPLICATIONS

The present disclosure claims the priority of Chinese Patent Application No. 202111275007.0, filed on October 29, 2021, the contents of which are incorporated herein in their entirety by reference.

### TECHNICAL FIELD

The present disclosure relates to the field of communication technologies, and in particular, to a wireless signal processing method, a controlled device, a terminal, a relay device, a control device, an electronic device, and a computer-readable storage medium.

### BACKGROUND

Frequency bands, supported by 5th generation mobile communication technology (5G), include a first frequency range (FR1) and a second frequency range (FR2). A frequency band corresponding to FR2 is from 24.25 to 52.6 GHz, frequencies within this frequency band are in a frequency range of millimeter waves. If a millimeter-wave frequency spectrum is adopted for communication, wireless frequency spectrum resources for wireless communication can be expanded.

However, during the millimeter-wave frequency spectrum being used for wireless communication, the millimeter wave frequency spectrum is easily blocked by obstacles, resulting in an increased loss of communication signals carried by the millimeter-wave frequency spectrum in a wireless transmission process.

### SUMMARY

An embodiment of the present application provides a wireless signal processing method, including: acquiring configuration information determined by a control device based on frequency band information supported by a current device and operation state information reported by the current device; and adjusting an operation mode of the current device according to the configuration information, the operation mode corresponding to a propagation direction of a feedback beam.

An embodiment of the present application provides a wireless signal processing method, including: acquiring operation state information reported by a controlled device and frequency band information supported by the controlled device; generating configuration information according to the operation state information and the frequency band information supported by the controlled device; and sending the configuration information to the controlled device, so that the controlled device adjusts an operation mode of the controlled device according to the configuration information, the operation mode corresponding to a propagation direction of a feedback beam.

An embodiment of the present application provides a controlled device, including: a first acquisition module configured to acquire configuration information determined by a control device based on frequency band information supported by a current device and operation state information reported by the current device; and an adjustment module configured to adjust an operation mode of the current device according to the configuration information, the operation mode corresponding to a propagation direction of a feedback beam.

An embodiment of the present application provides a terminal, including: at least one controlled device described above.

An embodiment of the present application provides a relay device, including: at least one controlled device described above.

An embodiment of the present application provides a control device, including: a second acquisition module configured to acquire operation state information reported by a controlled device and frequency band information supported by the controlled device; a generation module configured to generate configuration information according to the operation state information and the frequency band information supported by the controlled device; and a sending module configured to send the configuration information to the controlled device, so that the controlled device adjusts an operation mode of the controlled device according to the configuration information, the operation mode corresponding to a propagation direction of a feedback beam.

An embodiment of the present application provides an electronic device, including: at least one processor; and a memory having at least one computer program stored thereon, the at least one computer program, executed by the at least one processor, causes the at least one processor to implement the wireless signal processing method described above.

An embodiment of the present application provides a computer-readable storage medium having a computer program stored thereon, the computer program, executed by a processor, causes the processor to implement the wireless signal processing method described above.

With respect to above aspects and other aspects of the present application and implementations thereof, further description is provided in the description of accompanying drawings, detailed implementations and claims.

### BRIEF DESCRIPTION OF DRAWINGS

Fig. 1 illustrates a flowchart of a wireless signal processing method according to an embodiment of the present application.
Fig. 2 illustrates a flowchart of a wireless signal processing method according to an embodiment of the present application.
Fig. 3 illustrates a flowchart of a wireless signal processing method according to an embodiment of the present application.
Fig. 4 illustrates a flowchart of a wireless signal processing method according to an embodiment of the present application.
Fig. 5 illustrates a flowchart of a wireless signal processing method according to an embodiment of the present application.
Fig. 6 illustrates a flowchart of a wireless signal processing method according to an embodiment of the present application.
Fig. 7 illustrates a schematic structural diagram of a controlled device according to an embodiment of the present application.
Fig. 8 illustrates a schematic structural diagram of a terminal according to an embodiment of the present application.
Fig. 9 illustrates a schematic structural diagram of a reply device according to an embodiment of the present application.
Fig. 10 illustrates a schematic structural diagram of a control device according to an embodiment of the present application.
Fig. 11 illustrates a schematic structural diagram of a wireless signal processing system according to an embodiment of the present application.
Fig. 12 illustrates a schematic diagram of exemplary hardware architecture of a computing device for implementing a wireless signal processing method and a wireless signal processing apparatus according to embodiments of the present application.

### DETAIL DESCRIPTION OF EMBODIMENTS

In order to make purposes, technical solutions, and advantages of the present application clearer, embodiments of the present application are described below with reference to the accompanying drawings. It should be noted that the embodiments of the present application and characteristics in the embodiments may be combined with each other if no conflict is incurred.

In a propagation process, an antenna beam transmitted by a base station may be blocked by different obstacles, so that terminal users in some areas cannot receive communication signals, thereby causing a communication blind area. By introducing a reflecting intelligent surface (RIS) or an intelligent reflecting surface (IRS), a coverage range of the communication signals is expanded, and a communication capacity of a communication cell is improved.

In some mobile communication processes, a reflecting surface is formed by a fixed phase shifter, but the fixed phase shifter cannot automatically adapt to a rapid movement of the terminal users, which may cause that a communication signal sent by the base station cannot be sent to rapid-moving terminal users, i.e., a dynamic wireless channel cannot be established between the base station and the terminal, which cannot adapt to the rapid movement of the terminal users.

The control device in the present application may be a device (e.g., a base station, etc.) controlling the RIS, and the controlled device may be the RIS, a terminal, a relay device (e.g., a relay, a repeater, or a smart repeater, etc.).

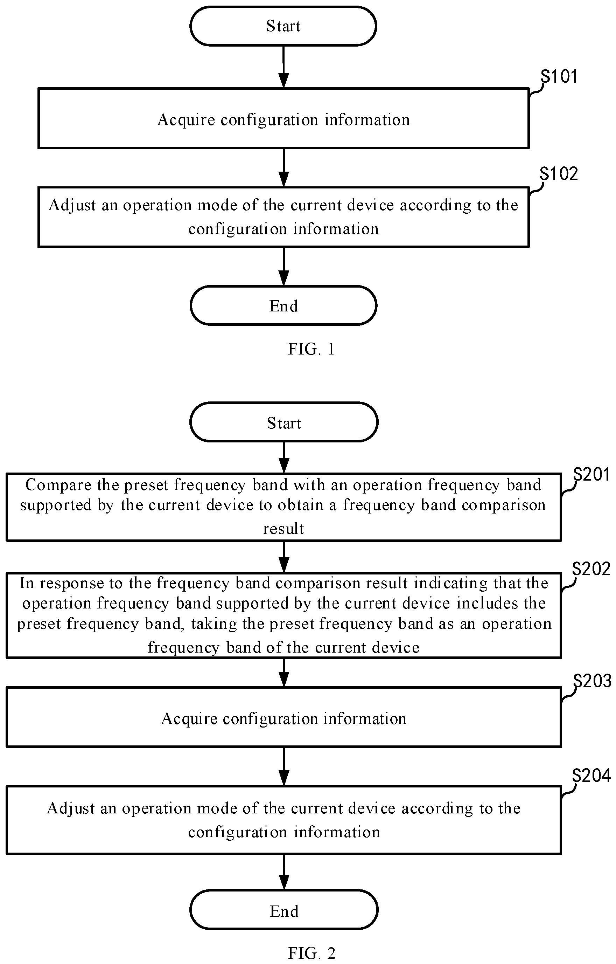

Fig. 1 illustrates a flowchart of a wireless signal processing method according to an embodiment of the present application. The wireless signal processing method may be applied to a controlled device.

As shown in Fig. 1, the wireless signal processing method provided in the embodiment of the present application may include following operations S 101 and S 102.

At operation S101, acquiring configuration information.

The configuration information is determined by a control device based on frequency band information supported by a current device and operation state information reported by the current device.

For example, the frequency band information supported by the current device may include a frequency band A, a frequency band B, and the like, the frequency band A may be from 700MHz to 800MHz, or the like, and the frequency band B may be from 850MHz to 950MHz, or the like. The current device may contrapuntally process a wireless signal carried by an incident beam sent by the control device in a specific frequency band through supporting various different frequency bands, to enhance a signal intensity of the wireless signal in a transmission process, so that the terminal can receive a wireless communication signal with better signal intensity.

At operation S102, adjusting an operation mode of the current device according to the configuration information.

The operation mode of the current device corresponds to a propagation direction of a feedback beam.

In some implementations, a wireless signal carried by the feedback beam is not to be modified by the controlled device, but is replaced by the wireless signal carried by the incident beam and acquired by the current device, so as to ensure an accuracy of the wireless signal carried by the feedback beam.

It should be noted that propagation directions of feedback beams corresponding to different operation modes are different, so that the current device can provide suitable wireless signals for a plurality of target terminals located at different locations, to improve the communication quality of the target terminals.

In the wireless signal processing method provided in the present application, the configuration information determined by the control device based on the frequency band information supported by the current device and the operation state information reported by the current device is acquired, thereby determining the configuration information of the current device; the operation mode of the current device is adjusted according to the configuration information, the propagation directions of the feedback beams corresponding to different operation modes are different, the wireless signal carried by the feedback beam is the same as the wireless signal carried by the incident beam acquired by the current device, the propagation direction of the incident beam can be flexibly adjusted, communication faults caused by an antenna beam being blocked by obstacles are avoided, the coverage area of wireless communication is expanded, the loss of the communication signal carried by the incident beam in the transmission process is reduced, and the communication quality is improved.

In some implementations, the feedback beam includes at least one of a reflected beam, a transmission beam, or a refracted beam.

By processing the incident beam, for example, reflecting the incident beam at a specific angle, or directly transmitting the incident beam, or refracting the incident beam at a preset refractive index, the feedback beam can better meet communication expectations of the target terminal, the communication signal received by the target terminal is enhanced, and the communication quality is improved.

Fig. 2 illustrates a flowchart of a wireless signal processing method according to an embodiment of the present application. The wireless signal processing method may be applied to a controlled device. The wireless signal processing method shown in Fig. 2 is different from the wireless signal processing method shown in Fig. 1 in that: the controlled device has a frequency selection function. The configuration information includes: a preset frequency band for meeting an operation expectation of the controlled device. Before adjusting the operation mode of the current device, an operation frequency band of the controlled device is to be configured, so that the controlled device can normally operate based on a specific operation frequency band.

As shown in Fig. 2, the wireless signal processing method according to the embodiment of the present application may include following operations S201 to S204.

At operation S201, comparing the preset frequency band with the operation frequency band supported by the current device to obtain a frequency band comparison result.

The preset frequency band may include a first frequency band, a second frequency band, ......, and an M-th frequency band, M represents a total number of frequency bands, and M is an integer greater than or equal to 1. The preset frequency band includes a plurality of preset frequencies, each of the preset frequencies may be used to transmit a wireless signal.

For example, the first frequency band is from 700MHz to 800MHz, and the operation frequency band supported by the current device is also from 700MHz to 800MHz; so that the frequency band comparison result is determined to be that the first frequency band in the preset frequency band is the same as the operation frequency band supported by the current device.

For another example, if the frequency band comparison result is determined to be that the preset frequency band does not include the operation frequency band supported by the current device, the control device is to readjust the configuration information according to the operation frequency band supported by the current device, so that the operation frequency band of the current device is matched with the preset frequency band configured by the control device.

At operation S202, in response to that the frequency band comparison result is determined to be that the operation frequency band supported by the current device includes the preset frequency band, taking the preset frequency band as the operation frequency band of the current device.

The operation frequency band may include: at least one of operation frequency band information, operation frequency band width information or an operation carrier frequency.

In a case where it is determined that the operation frequency band of the current device is the preset frequency band (for example, the first frequency band), the current device can receive wireless signals within the first frequency band; for wireless signals outside the first frequency band, the current device performs no process, or scatters or absorbs the wireless signals outside the first frequency band, so that the received wireless signals within the first frequency band can be normally processed by the current device.

For example, the current device may also actively report the operation frequency band supported by the current device to the control device in an active reporting manner, so that the control device can allocate a frequency band to the current device according to the operation frequency band supported by the current device, or, adjust the operation frequency band of the control device based on location information of the current device, so that the control device and the controlled device can communicate normally, and a coverage area of the wireless signals of the control device is increased.

The operation frequency band supported by the current device may be updated as desired, i.e., the operation frequency band supported by the current device may be dynamically updated according to external expectations, such as location information, so that the current device can better adapt to surrounding communication environment, to provide a better communication service for the terminal.

At operation S203, acquiring configuration information.

At operation S204, adjusting an operation mode of the current device according to the configuration information.

It should be noted that operations S203 and S204 are respectively the same as operations S101 and S102 described above, and thus are not repeated again.

In the wireless signal processing method provided in the present application, the frequency band comparison result is obtained by comparing the preset frequency band with the operation frequency band supported by the current device, and whether the preset frequency band is matched with the operation frequency band supported by the current device can be determined; in a case where the frequency band comparison result is determined to be that the operation frequency band supported by the current device includes the preset frequency band, the preset frequency band is taken as the operation frequency band of the current device, so that the current device can meet expectations of the control device, and a communication connection is to be established between the control device and the current device to facilitate to receive the wireless signal carried by the incident beam sent by the control device; the configuration information determined by the control device based on the frequency band information supported by the current device and the operation state information reported by the current device is acquired, thereby determining the configuration information of the current device; the operation mode of the current device is adjusted according to the configuration information, the propagation directions of the feedback beams corresponding to different operation modes are different, the wireless signal carried by the feedback beam is the same as the wireless signal carried by the incident beam acquired by the current device, the propagation direction of the incident beam can be flexibly adjusted, communication faults caused by an antenna beam being blocked by obstacles are avoided, the coverage area of wireless communication is expanded, the loss of the communication signal carried by the incident beam in the transmission process is reduced, and the communication quality is improved.

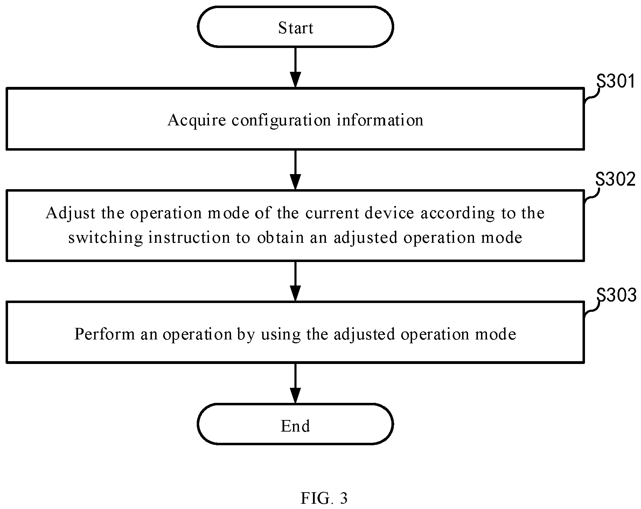

Fig. 3 illustrates a flowchart of a wireless signal processing method according to an embodiment of the present application. The wireless signal processing method may be applied to a controlled device. The wireless signal processing method shown in Fig. 3 is different from the wireless signal processing method described above in that: the configuration information further includes a switch instruction configured to switch the operation mode of the controlled device, so that the controlled device can select an appropriate operation mode to operate according to information of environment where the controlled device is located and the configuration information of the control device, and an operation efficiency is improved.

As shown in Fig. 3, the wireless signal processing method may include following operations S301 to S303.

At operation S301, acquiring configuration information.

The configuration information includes a switch instruction configured to switch the operation mode of the current device (i.e., the controlled device).

In a case where it is determined that the configuration information is received, the current device can select an appropriate operation mode to operate by referring to information of environment where the controlled device is located and the switch instruction configured by the control device, the operation efficiency is improved.

At operation S302, adjusting the operation mode of the current device according to the switch instruction to obtain an adjusted operation mode.

The adjusted operation mode may include various operation modes, for example, an operation mode A, an operation mode B, an operation mode C, and the like. The propagation directions of the feedback beams corresponding to different operation modes are different, so that expectations of different terminals are met, the communication signal is prevented from being blocked by obstacles, and the communication quality of the terminals is improved.

For example, the propagation direction of the feedback beam corresponding to the operation mode A may be in the northwest direction, so as to enhance a strength of received signal of a terminal in the northwest direction; the propagation direction of the feedback beam corresponding to the operation mode B may be in the southeast direction, so as to enhance a strength of received signal of a terminal in the southeast direction; the propagation direction of the feedback beam corresponding to the operation mode C may be in the southwest direction, so as to enhance a strength of received signal of a terminal in the southwest direction, and the like.

The above description of the adjusted operation mode is only illustrative, and the adjusted operation mode may be specifically set according to specific situations, and other adjusted operation modes not described herein are also within the protection scope of the present application, and are not repeated herein.

At operation S303, operating in the adjusted operation mode.

For example, if the adjusted operation mode is the operation mode C, it indicates that the current device is in an operation-stopped state, that is, the current device is not to process the incident beam, or absorbs the incident beam autonomously, or is not to send the feedback beam to other devices.

In some implementations, operating in the adjusted operation mode includes: aiming the propagation direction of the feedback beam at a target terminal according to acquired location information of the target terminal.

By matching the location information of the target terminal with the location information of the current device, angle information of an angle between the target terminal and the current device is determined, and the propagation direction of the feedback beam is adjusted according to the angle information, so that the propagation direction of the feedback beam is aimed at the target terminal, the strength of received signal of the target terminal is enhanced, and the communication quality of the target terminal is improved.

In some implementations, operating in the adjusted operation mode includes: scattering the wireless signal carried by the incident beam.

The wireless signal carried by the incident beam is scattered to other directions so that the target terminal cannot receive the wireless signal carried by the feedback beam reflected by the current device, and a signal interference of the reflected beam of the current device on the target terminal is reduced, so that the target terminal can receive communication signals from other devices.

In the wireless signal processing method provided in the present application, the operation mode of the current device is adjusted according to the switch instruction to obtain the adjusted operation mode, so that the adjusted operation mode is more suitable for the actual communication environment, the propagation directions of feedback beams corresponding to different operation modes are different, and the communication signal is prevented from being blocked by obstacles; operating in the adjusted operation mode enables the feedback beam to be more specific or pertinent to a specific target terminal, and the communication quality of the target terminal is improved.

In some implementations, the configuration information further includes: operation parameters including at least one of phase information, beamforming information, precoding information, configuration indication information, spatial relation information (spatial Relation Info), filtering information, or sounding reference signal (SRS) resource indication information.

Different operation modes correspond to different phase information; different operation modes correspond to different beamforming information; different operation modes correspond to different precoding information; the configuration indication information includes: transmission configuration indication (TCI) sent by the control device; the spatial Relation Info includes: information of a spatial domain transmission filter; the SRS resource indication information may include: an SRS resource indicator.

Through operation parameters in different dimensions, operation conditions of the controlled device in different dimensions can be represented, so that the control device can perform multi-dimension configuration on the controlled device, the processing performance of the controlled device on the wireless signal carried by the incident beam is improved, the obtained wireless signal carried by the feedback beam is better adapt to the expectations of the target terminal, and the communication quality of the target terminal is improved.

In some implementations, the configuration information further includes: an adjustment time; adjusting the operation mode of the current device according to the configuration information includes: determining the adjustment time according to an obtained preset delay duration and a current time; and adjusting the operation mode of the current device according to the adjustment time.

The preset delay duration can ensure that the controlled device has enough processing time, and errors of information processing caused by switching the operation mode can be avoided.

For example, the preset delay duration may be set to ten seconds or twenty seconds, and if the current time is 14:30:38, the adjustment time may be 14:30:48, so that the controlled device can switch the operation mode at 14:30:48, thereby improving the accuracy of processing information.

In some implementations, the acquiring configuration information includes: in response to determining that the current device is in a preset time period, acquiring the configuration information.

The preset time period is preset according to a habit of using the current device. For example, the preset time period may be from 0: 00 to 6:00 in every morning, or may be any other time duration. In the preset time period, the configuration information is acquired, so that the current device can process the configuration information in time, facilitating to process the incident beam in time subsequently, and improve the processing efficiency.

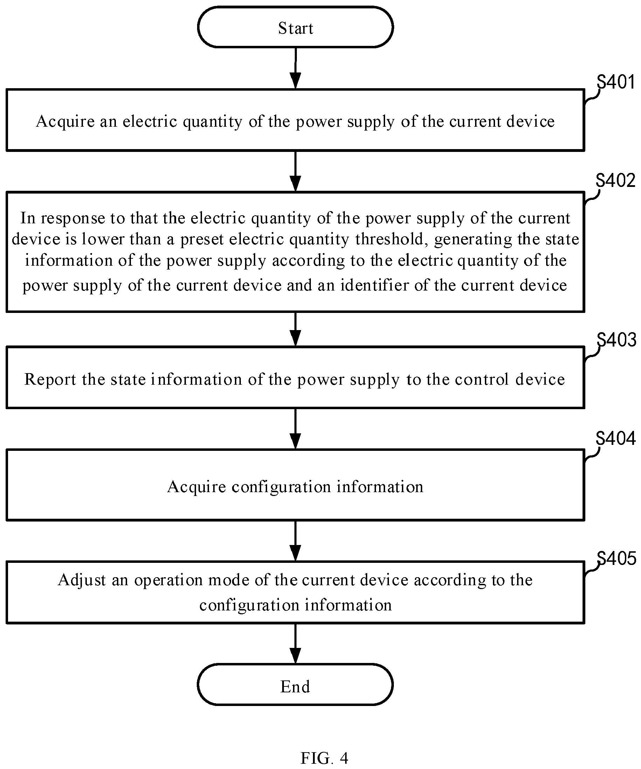

Fig. 4 illustrates a flowchart of a wireless signal processing method according to an embodiment of the present application. The wireless signal processing method may be applied to a controlled device. The wireless signal processing method shown in Fig. 4 is different from the wireless signal processing method described above in that: the operation state information includes state information of a power supply, a condition of the power supply of the controlled device can be reflected through the state information of the power supply, so as to determine whether the controlled device can operate normally.

As shown in Fig. 4, the wireless signal processing method in the embodiment of the present application may include following operations S401 to S405.

At operation S401, acquiring an electric quantity of the power supply of the current device.

The electric quantity of the power supply is power supply usage condition of the current device. If a full-load electric quantity is taken as a reference (i.e., the full-load electric quantity is 100%), the electric quantity of the power supply may be any one of 0% to 100% of the full-load electric quantity.

For example, the current device may report the electric quantity of the power supply periodically (for example, report the electric quantity of the power supply once every a first preset time period (e.g., three seconds or four seconds, etc.) to the control device), so that the control device can obtain the electric quantity of the power supply of the current device in real time.

At operation S402, in response to determining that the electric quantity of the power supply of the current device is lower than a preset electric quantity threshold, generating the state information of the power supply according to the electric quantity of the power supply of the current device and an identifier of the current device.

The preset electric quantity threshold may be a predefined lowest power for supporting an operation of the current device, or a predefined power for supporting a lowest operation of the current device.

For example, the preset electric quantity threshold is 30% of the full-load electric quantity, i.e., in a case where the electric quantity of the power supply of the current device is lower than 30% of the full-load electric quantity, the current device generates the state information of the power supply, the state information of the power supply is configured to indicate that the current device is in a low electric quantity operation state.

For another example, the preset electric quantity threshold is 10% of the full-load electric quantity, i.e., in a case where the electric quantity of the power supply of the current device is lower than 10% of the full-load electric quantity, the current device generates the state information of the power supply, the state information of the power supply is configured to indicate that the current device is near to be shutdown.

At operation S403, reporting the state information of the power supply to the control device.

In a case where it is determined that the control device receives the state information of the power supply, the control device may acquire a state where the current device is in through the identifier of the current device and the electric quantity of the power supply of the current device, for example, if the current device is in a low electric quantity operation state, or if the current device is near to be shutdown, the control device is expected to perform advanced processing (for example, schedule other controlled devices), so as to avoid any communication fault caused by automatic shutdown of the current device due to insufficient electric quantity of the power supply.

In some implementations, reporting the state information of the power supply to the control device includes: in response to a state query request, for querying a state of the power supply, sent by the control device, feeding back a state query response to the control device.

The state query response includes the state information of the power supply.

By responding to the state query request, for querying the state of the power supply, sent by the control device, the state information of the power supply of the current device is fed back to the control device, so that the control device can know in time whether the current device has a normal operation electric quantity, and in a case where it is determined that the current device is in low electric quantity or energy-saving state, adjust a communication strategy in time (for example, schedule other controlled devices to expand the coverage area of the control device, and the like), so that the communication efficiency is improved.

At operation S404, acquiring configuration information.

It should be noted that operation S404 is the same as operation S101, and thus is not repeated herein.

At operation S405, adjusting an operation mode of the current device according to the configuration information.

In a case where it is determined that the current device is in low electric quantity or energy-saving state, the configuration information may include closing the current device, or, reducing a coverage area corresponding to the incident beam received by the current device, so that the control device can schedule other controlled devices to expand the coverage area of the control device, and the communication efficiency is improved.

In the wireless signal processing method provided in the present application, in a case where it is determined that the electric quantity of the power supply of the current device is lower than the preset electric quantity threshold, the state information of the power supply is generated according to the electric quantity of the power supply of the current device and the identifier of the current device, and the state information can represent a condition of the electric quantity of the power supply of the current device; the state information of the power supply is reported to the control device, so that the control device can conveniently know the condition of the electric quantity of the power supply of the current device in time, the communication fault caused by automatic shutdown of the current device due to insufficient electric quantity is avoided, and a normal communication between the control device and the current device is ensured; in a case where the control device determines that the electric quantity of the power supply of the current device is not sufficient to support the communication with the control device, the configuration information is sent to the current device, so that the current device can adjust the operation mode of the current device according to the configuration information, the adjusted operation mode is more suitable for the electric quantity of the power supply of the current device, the communication efficiency between the current device and the control device is improved.

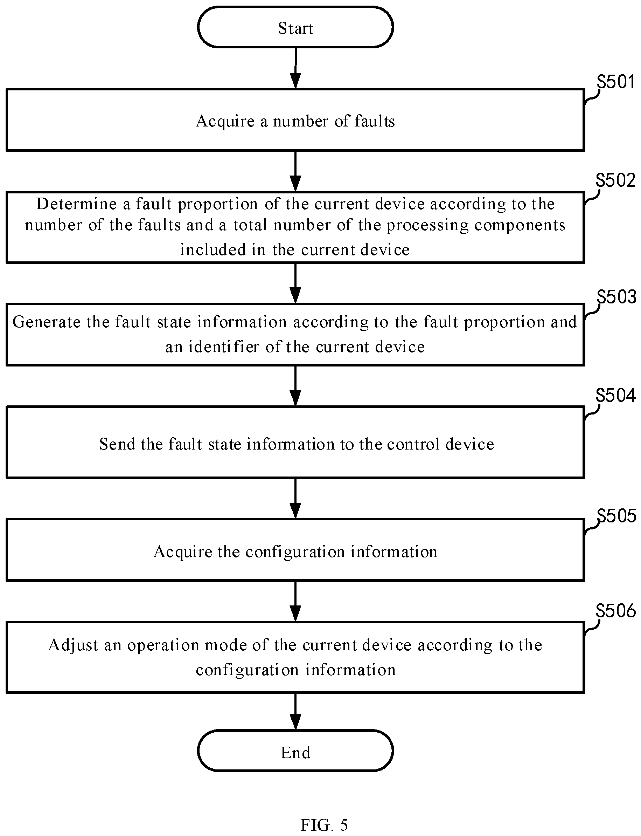

Fig. 5 illustrates a flowchart of a wireless signal processing method according to an embodiment of the present application. The wireless signal processing method may be applied to a controlled device. The wireless signal processing method shown in Fig. 5 is different from the wireless signal processing method described above in that: the operation state information further includes fault state information configured to represent whether the controlled device has a fault, so that the control device can conveniently adjust the communication strategy in time to avoid a transmission fault of a communication signal.

As shown in Fig. 5, the wireless signal processing method provided in the embodiment of the present application may include operations S501 to S506.

At operation S501, acquiring a total number of faults.

The current device includes a plurality of processing units, the number of faults is used for representing a total number of processing units with faults.

For example, the current device may report the number of the faults periodically (for example, the number of the faults is reported once every a second preset time period (such as, five seconds or seven seconds)) to the control device, so that the control device can acquire the number of the processing units with faults in the current device in time, a communication fault caused by unavailability of the current device can be avoided.

At operation S502, determining a fault proportion of the current device according to the number of the faults and the number of the processing units included in the current device.

The fault proportion may be determined by a ratio of the number of the faults to the number of the processing units included in the current device.

For example, if the fault proportion is 50%, and the current device includes twelve processing units, it indicates that six processing units in the current device have faults; if the fault proportion is 30%, and the current device includes ten processing units, it indicates that three processing units in the current device have faults. According to different fault proportions, whether the current device can operate normally can be determined.

At operation S503, generating the fault state information according to the fault proportion and an identifier of the current device.

The fault state information further includes a fault proportion threshold.

For example, the fault proportion threshold is set to 50%, and the current device includes twelve processing units, it indicates that if six processing units in the current device have faults, the fault state information is generated according to the fault proportion and the identifier of the current device, to represent that the current device may not accurately process a wireless signal carried by an incident beam sent by the control device.

For another example, the fault proportion threshold is set to 60%, and the current device includes twenty processing units, it indicates that if twelve processing units in the current device have faults, the fault state information is generated according to the fault proportion and the identifier of the current device, to represent that the current device may not perform normal operations.

At operation S504, sending the fault state information to the control device.

In a case where it is determined that the control device received the fault state information, from the identifier of the current device and the fault proportion of the current device, the control device may know whether the controlled device can operate normally, or whether an accuracy of processing of the current device on the wireless signal meets a preset expectation. In a case where it is determined that the controlled device cannot operate normally, the control device is expected to perform advanced processing (for example, schedule other controlled devices) to avoid a communication fault caused by the controlled device failing to operate normally.

In some implementations, the sending the fault state information to the control device includes: in response to a fault state query request sent by the control device, feeding back a fault state query response to the control device.

The fault state query response includes the fault state information.

By feeding back the fault state information of the current device in response to the fault state query request sent by the control device, the control device can know in time whether the current device has a fault, and in a case where it is determined that the current device has a fault, the control device can adjust a communication strategy (for example, schedule other controlled device to expand the coverage area of the control device, and the like) in time, so as to improve the communication efficiency.

At operation S505, acquiring the configuration information.

It should be noted that operation S505 is the same as operation S101 shown in Fig. 1, and is not repeated herein.

At operation S506, adjusting an operation mode of the current device according to the configuration information.

If the fault proportion of the current device is determined to be greater than the fault proportion threshold, it indicates that the current device cannot operate normally, and in this case, the configuration information may be configured to shut down the current device, so that the control device can schedule any other controlled device to expand the coverage area of the control device, to improve the communication efficiency.

In the wireless signal processing method provided in the present application, the fault proportion of the current device is determined according to the number of the faults and the number of the processing units included in the current device, a fault condition of the current device is monitored in time; according to the fault proportion and the identifier of the current device, the fault state information is generated and sent to the control device, so that the control device can know the fault condition of the current device in time, a communication fault caused by that the current device cannot operate normally due to faults is avoided; in a case where the control device determines that the accuracy of processing of the current device on the wireless signal does not meet the preset expectation, the configuration information is sent to the current device, so that the current device can adjust the operation mode of the current device according to the configuration information, the adjusted operation mode is more suitable for the fault condition of the current device, and the communication efficiency between the current device and the control device is improved.

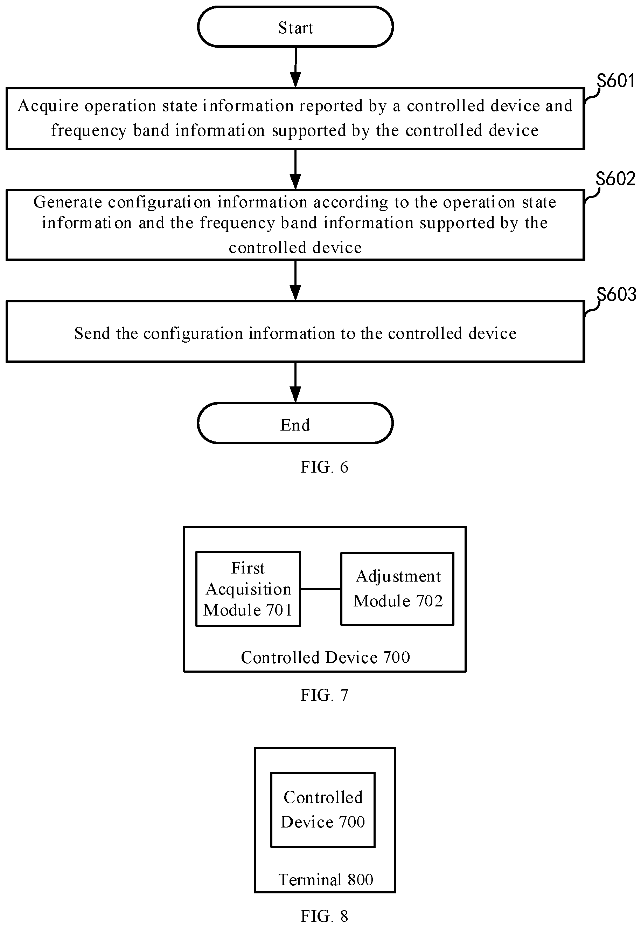

Fig. 6 illustrates a flowchart of a wireless signal processing method according to an embodiment of the present application. The wireless signal processing method may be applied to a control device. As shown in Fig. 6, the wireless signal processing method provided in the embodiment of the present application may include following operations S601 to S603.

At operation S601, acquiring operation state information reported by a controlled device and frequency band information supported by the controlled device.

The operation state information is configured to represent whether the controlled device is in a fault state or whether an electric quantity of a power supply of the controlled device is sufficient to support a normal operation. The frequency band information supported by the controlled device may include: frequency band information and operation carrier frequency information supported by the controlled device and the like.

The operation state information may be reported by the controlled device to the current control device every a first preset time period (for example, two seconds or five seconds), or may be included in an query response fed back by the controlled device according to an query request sent by the current control device, so that the control device can know a state of the controlled device in time, communication faults can be avoided, and the communication efficiency is improved.

At operation S602, generating configuration information according to the operation state information and the frequency band information supported by the controlled device.

The configuration information may include: at least one of a preset frequency band, a switch instruction, or an adjustment time.

In some implementations, the switch instruction is used for switching an operation mode of the controlled device, the operation mode includes a first operation mode or a second operation mode; the first operation mode is configured to indicate the controlled device to aim a propagation direction of a feedback beam at the target terminal according to acquired location information of the target terminal, and a wireless signal carried in the feedback beam is the same as a wireless signal carried in an incident beam acquired by the controlled device; the second operation mode is configured to indicate the controlled device to scatter the wireless signal carried in the incident beam.

In some implementations, the controlled device may further include a third operation mode configured to indicate the controlled device to absorb the wireless signal carried in the incident beam, so as to reduce the signal interference on the target terminal.

The controlled device may operate in various operation modes according to expectations of the control device, to expand the coverage area of the control device, ensure the wireless signal sent by the control device to be received better by the target terminal, and improve the communication quality of the target terminal.

In some implementations, the sending the configuration information to the controlled device includes: sending the preset frequency band to the controlled device, so that the controlled device determines an operation frequency band of the controlled device according to the preset frequency band and the frequency band information supported by the controlled device.

The preset frequency band may include a first frequency band, a second frequency band, ......, and an M-th frequency band, M represents a total number of frequency bands, and M is an integer greater than or equal to 1.

In a case where the preset frequency band includes the frequency band supported by the control device, for example, the second frequency band is the frequency band supported by the control device, the second frequency band is set as the operation frequency band of the controlled device, so that the controlled device can receive a wireless signal within the second frequency band, and contrapuntally process the wireless signal sent by the control device in the second frequency band, to improve the communication quality.

At operation S603, sending the configuration information to the controlled device.

In a case where the configuration information is received by the controlled device, the controlled device may adjust the operation mode according to the configuration information, the operation mode corresponds to the propagation direction of the feedback beam, and the wireless signal carried by the feedback beam is the same as the wireless signal carried by the incident beam acquired by the current device.

In the wireless signal processing method provided in the present application, by acquiring the operation state information reported by the controlled device and the frequency band information supported by the controlled device, a current operation condition of the controlled device can be known, which facilitates to control the controlled device; the configuration information is generated according to the operation state information and the frequency band information supported by the controlled device, so that the configuration information can regulate and control the controlled device according to an actual operation condition of the controlled device; the configuration information is sent to the controlled device, so that the controlled device can adjust the operation mode according to the configuration information, the propagation direction of the incident beam received by the controlled device is flexibly adjusted, and thus communication faults caused by an antenna beam being blocked by obstacles are avoided, the coverage area of wireless communication is expanded, the loss of the communication signal carried by the incident beam in the transmission process is reduced, and the communication quality is improved.

In some implementations, the operation state information includes: state information of a power supply; before executing operation S602 (i.e., the generating configuration information according to the operation state information and the frequency band information supported by the controlled device), the wireless signal processing method further includes: acquiring the state information of the power supply sent by the controlled device, the state information of the power supply including an electric quantity of the power supply of the controlled device; and in response to that the electric quantity of the power supply of the controlled device is lower than a preset electric quantity threshold, generating a switch instruction.

The switch instruction is used for switching the operation mode of the controlled device.

For example, in a case where it is determined that the electric quantity of the power supply of the controlled device is lower than the preset electric quantity threshold, the switch instruction is generated for switching the operation mode of the controlled device to an operation mode of autonomously absorbing an incident beam or scattering an incident beam, so as to reduce a signal interference of a reflected beam of the controlled device on the target terminal, and enable the target terminal to receive communication signals of other devices.

In some implementations, the controlled device includes a plurality of processing units, the operation state information further includes fault state information; before executing operation S602 (i.e., the generating configuration information according to the operation state information and the frequency band information supported by the controlled device), the wireless signal processing method further includes: acquiring the fault state information sent by the controlled device, the fault state information including a fault proportion; and in response to that the fault proportion is higher than a fault proportion threshold, generating a switch instruction for switching the operation mode of the controlled device.

The fault proportion threshold may be specifically set according to actual conditions.

For example, the fault proportion threshold is set to 50%, and the controlled device includes twelve processing units, it indicates that if six processing units in the controlled device have faults, the fault proportion in the received fault state information sent by the controlled device is greater than 50%, the switch instruction is generated for switching the operation mode of the controlled device to the operation mode of autonomously absorbing an incident beam or scattering an incident beam, so as to reduce a signal interference of a reflected beam of the controlled device on the target terminal, and enable the target terminal to receive communication signals of other devices, thereby improving the communication quality of the target terminal.

The controlled device provided in the embodiment of the present application is described in detail below with reference to the accompanying drawings. Fig. 7 illustrates a schematic structural diagram of a controlled device according to an embodiment of the present application. As shown in Fig. 7, the controlled device 700 may include a first acquisition module 701 and an adjustment module 702.

The first acquisition module 701 is configured to acquire configuration information determined by a control device based on frequency band information supported by a current device and operation state information reported by the current device.

The adjustment module 702 is configured to adjust an operation mode of the current device according to the configuration information, the operation mode corresponding to a propagation direction of a feedback beam.

In the controlled device provided by the present application, the first acquisition module 701 acquires the configuration information determined by the control device based on the frequency band information supported by the current device and the operation state information reported by the current device, to determine the configuration information of the current device; the adjustment module 702 adjusts the operation mode of the current device according to the configuration information, propagation directions of feedback beams corresponding to different operation modes are different, the wireless signal carried by the feedback beam is the same as the wireless signal carried by the incident beam acquired by the current device, the propagation direction of the incident beam can be flexibly adjusted, communication faults caused by an antenna beam being blocked by obstacles are avoided, the coverage area of wireless communication is expanded, the loss of the communication signal carried by the incident beam in the transmission process is reduced, and the communication quality is improved.

Fig. 8 illustrates a schematic structural diagram of a terminal according to an embodiment of the present application. As shown in Fig. 8, the terminal 800 may include at least one controlled device 700 shown in Fig. 7.

The controlled device 700 may include: a first acquisition module 701 configured to acquire configuration information determined by a control device based on frequency band information supported by a current device and operation state information reported by the current device; and an adjustment module 702 configured to adjust an operation mode of the current device according to the configuration information, the operation mode corresponding to a propagation direction of a feedback beam.

In the terminal provided in the present application, the terminal 800 acquires the configuration information determined by the control device based on the frequency band information supported by the current device and the operation state information reported by the current device through the first acquisition module 701, to determine the configuration information of the current device; and adjusts the operation mode of the current device according to the configuration information through the adjustment module 702, propagation directions of feedback beams corresponding to different operation modes are different, the wireless signal carried by the feedback beam is the same as the wireless signal carried by the incident beam acquired by the current device, the propagation direction of the incident beam can be flexibly adjusted, communication faults caused by an antenna beam being blocked by obstacles are avoided, the coverage area of wireless communication is expanded, the loss of the communication signal carried by the incident beam in the transmission process is reduced, and the communication quality is improved.

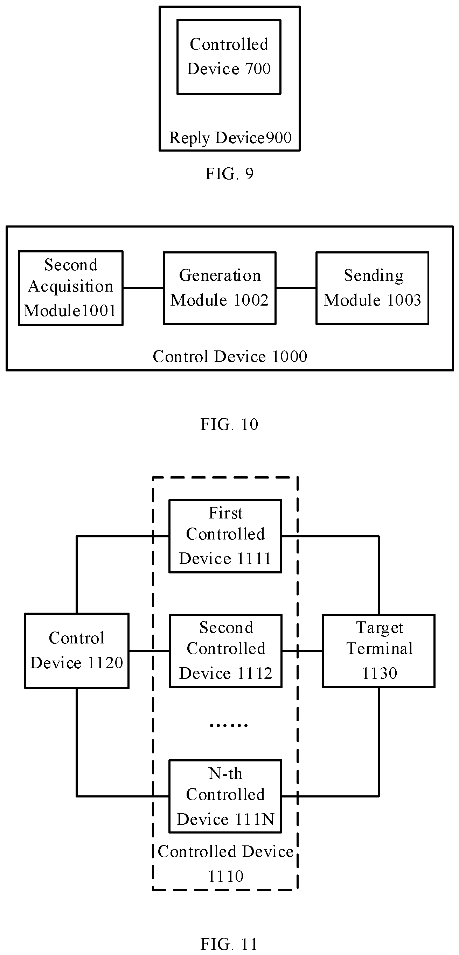

Fig. 9 illustrates a schematic structural diagram of a reply device according to an embodiment of the present application. As shown in Fig. 9, the reply device 900 may include at least one controlled device 700 shown in Fig. 7.

The controlled device 700 may include: a first acquisition module 701 configured to acquire configuration information determined by a control device based on frequency band information supported by a current device and operation state information reported by the current device; and an adjustment module 702 configured to adjust an operation mode of the current device according to the configuration information, the operation mode corresponding to a propagation direction of a feedback beam.

In the relay device provided in the present application, the relay device 900 acquires the configuration information determined by the control device based on the frequency band information supported by the current device and the operation state information reported by the current device through the first acquisition module 701, to determine the configuration information of the current device; adjusts the operation mode of the current device according to the configuration information through the adjustment module 702, propagation directions of feedback beams corresponding to different operation modes are different, the wireless signal carried by the feedback beam is the same as the wireless signal carried by the incident beam acquired by the current device, the propagation direction of the incident beam can be flexibly adjusted, communication faults caused by an antenna beam being blocked by obstacles are avoided, the coverage area of wireless communication is expanded, the loss of the communication signal carried by the incident beam in the transmission process is reduced, and the communication quality is improved.

Fig. 10 illustrates a schematic structural diagram of a control device according to an embodiment of the present application. As shown in Fig. 10, the control device 1000 may include a second acquisition module 1001, a generation module 1002 and a sending module 1003.

The second acquisition module 1001 is configured to acquire operation state information reported by a controlled device and frequency band information supported by the controlled device.

The generation module 1002 is configured to generate configuration information according to the operation state information and the frequency band information supported by the controlled device.

The sending module 1003 is configured to send the configuration information to the controlled device, so that the controlled device adjusts an operation mode of the controlled device according to the configuration information, the operation mode corresponding to a propagation direction of a feedback beam.

In the control device provided in the present application, the second acquisition module 1001 acquires the operation state information reported by the controlled device and the frequency band information supported by the controlled device, a current operation condition of the controlled device can be known, which facilitates to control the controlled device; the generation module 1002 generates the configuration information according to the operation state information and the frequency band information supported by the controlled device, so that the configuration information can regulate and control the controlled device according to an actual operation condition of the controlled device; the sending module 1003 sends the configuration information to the controlled device, so that the controlled device can adjust the operation mode according to the configuration information, the propagation direction of the incident beam received by the controlled device is flexibly adjusted, communication faults caused by an antenna beam being blocked by obstacles are avoided, the coverage area of wireless communication is expanded, the loss of the communication signal carried by the incident beam in the transmission process is reduced, and the communication quality is improved.

It should be understood that the present application is not limited to the specific configurations and processing described above and illustrated in the accompanying drawings. For convenience and simplicity of description, detailed description of known methods is omitted in the present application, and specific operation processes of the system, the module and the component described above may refer to corresponding processes of the above method, and are not repeated here.

Fig. 11 illustrates a schematic structural diagram of a wireless signal processing system according to an embodiment of the present application. As shown in Fig. 11, the wireless signal processing system may include: a plurality of controlled devices 1110, a control device 1120, and a target terminal 1130.

The controlled devices 1110 may include a first controlled device 1111, a second controlled device 1112, ......, an N-th controlled device 11 IN and the like, N represents a total number of the controlled devices, N is an integer greater than or equal to 1.

It should be noted that the controlled device may include: an RIS or an IRS. The IRS may be a 2-Dimensional (2D) artificial surface (i.e., metasurface) of Electromagnetic (EM) material, and may include a plurality of passive scattering components having a specially designed physical structure. The metasurface is an artificial material with a near-zero thickness and special EM properties. Also, the metasurface includes a plurality of scattering components, which may change a propagation direction of an incident EM beam in different ways.

In some implementations, the scattering components may adjust a propagation direction of a reflected beam by respectively changing phase shift angles thereof. By jointly controlling phases of all the scattering components, a reflected phase and a reflected angle of the communication signal carried by the incident beam can be arbitrarily adjusted to produce transmission paths meeting expectations of the target terminal 1130.

Further, by coherently processing (e.g., adding a suitable received signal power to the reflected signal) a reflected signal (i.e., a communication signal carried in the feedback beam corresponding to the incident beam), the interference is reduced and the reflected signal is enhanced, so that the target terminal can receive a better communication service.

In some implementations, the controlled device 1110 may be an RIS or an IRS, or a terminal, or a relay device (Relay Node). The relay device may be configured to forward a received communication signal to other devices (e.g., a repeater, a smart repeater, or the like) after performing amplification or regeneration processing on the received communication signal. The IRS may be deployed on surfaces of different devices (e.g., a surface of a building wall, or a surface of an aerial device, etc.), so that the IRS can more flexibly adapt to expectations of the target terminal 1130, to ensure that the target terminal 1130 can receive an enhanced transmission signal, a coverage area of the control device 1120 is expanded, a power consumption of the control device 1120 is reduced, and a security of data transmission is improved. The above description of the controlled device is only exemplary, and the controlled device may be specifically set according to actual expectations, and other controlled devices not described herein are also within the protection scope of the present application, and are not repeated herein.

It should be noted that the control device 1120 may include a base station, a network control device, or the like, the target terminal 1130 may include any one of a smart phone, an intelligent wearing device or a tablet PC.

The controlled device 1110 reports state information of a power supply or fault state information thereof to the control device 1120 every a preset time period (for example, two seconds or five seconds), so that the control device 1120 can determine the configuration information of the controlled device 1110 according to the state information of the power supply or the fault state information.

The configuration information may include frequency band information, information of an operation mode, or the like. The operation mode may include a first operation mode and a second operation mode; the first operation mode is configured to indicate the controlled device 1110 to aim a propagation direction of a feedback beam at the target terminal 1130 according to acquired location information of the target terminal 1130, and the second operation mode is configured to indicate the controlled device 1110 to scatter a wireless signal carried by an incident beam.

In a case where the controlled device 1110 is in the first operation mode, a communication signal sent by the control device 1120 is carried by the incident beam, and after the controlled device 1110 receives the incident beam, the controlled device 1110 aims the propagation direction of the feedback beam at the target terminal 1130 according to location information between the controlled device 1110 and the target terminal 1130, so as to improve the communication quality with the target terminal 1130.

In a case where the controlled device 1110 is in the second operation mode, the controlled device 1110 may perform scattering processing or autonomous absorption on the received incident beam to prevent the target terminal 1130 from being affected by the incident beam.

The feedback beam is a beam adjusted by the controlled device 1110, and a communication signal carried by the feedback beam is the same as a communication signal carried by the incident beam acquired by the controlled device 1110.

It should be noted that the control device 1120 determines whether to use the controlled device 1110 by parsing and analyzing the state information of the power supply or the fault state information.

For example, in a case where that electric quantity of the power supply of the first controlled device 1111 is lower than a preset electric quantity threshold (e.g., 20% of a full-load electric quantity, etc.), or a fault proportion of the processing units of the first controlled device 1111 is higher than a preset proportion threshold (e.g., 60%, etc.), that is, more than 60% of the processing units in the first controlled device 1111 have faults, the control device 1120 may shut down the first controlled device 1111.

In the wireless signal processing system provided by the present application, the controlled device 1110 can flexibly adjusts the propagation direction of the incident beam sent by the control device 1120, so as to avoid communication faults caused by an antenna beam being blocked by obstacles, the coverage area of wireless communication is expanded, the loss of the communication signal carried by the incident beam in the transmission process is reduced, and the target terminal can acquire a better communication service.

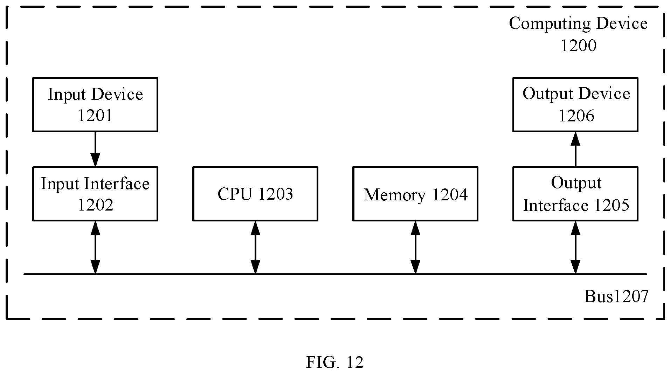

Fig. 12 illustrates a schematic diagram of exemplary hardware architecture of a computing device for implementing a wireless signal processing method and a wireless signal processing apparatus according to embodiments of the present application.

As shown in Fig. 12, the computing device 1200 includes an input device 1201, an input interface 1202, a central processing unit (CPU) 1203, a memory 1204, an output interface 1205, and an output device 1206. The input interface 1202, the CPU 1203, the memory 1204, and the output interface 1205 are connected via a bus 1207, and the input device 1201 and the output device 1206 are connected to the bus 1207 via the input interface 1202 and the output interface 1205, respectively, and further connected to other components of the computing device 1200.

The input device 1201 receives input information from outside and transmits the input information to the CPU 1203 through the input interface 1202; the CPU 1203 processes the input information based on computer-executable instructions stored in the memory 1204 to generate output information, temporarily or permanently stores the output information in the memory 1204, and then transmits the output information to the output device 1206 through the output interface 1205; the output device 1206 outputs the output information outside of the computing device 1200 to be used by users.

In some implementations, the computing device shown in Fig. 12 may be implemented as an electronic device, the electronic device may include: a memory configured to store at least one computer program; and at least one processor configured to execute the at least one computer program stored in the memory to perform the wireless signal processing method described above.

In some implementations, the computing device shown in Fig. 12 may be implemented as a wireless signal processing system, the wireless signal processing system may include: a memory configured to store a computer program; and a processor configured to execute the computer program stored in the memory to perform the wireless signal processing method described above.

An embodiment of the present application further provides a computer-readable storage medium having a computer program stored thereon, the computer program, executed by a processor, causes the processor to perform the wireless signal processing method described above. The above description is only for exemplary embodiments of the present application, but is not intended to limit the scope of the present application. In general, embodiments of the present application may be implemented in hardware or special purpose circuits, software, logic or any combination thereof. For example, some aspects may be implemented in hardware, and other aspects may be implemented in firmware or software to be executed by a controller, a microprocessor or other computing devices, although the present application is not limited thereto.

The embodiments of the present application may be implemented by a data processor of a mobile device executing computer program instructions, for example in a processor entity, or by hardware, or by a combination of software and hardware. The computer program instructions may be assembler instructions, instruction set architecture (ISA) instructions, machine instructions, machine-related instructions, microcode, firmware instructions, state setting data, or source or object code written in any combination of one or more programming languages.

The block diagram of any logical flowchart in the accompanying drawings of the present application may represent program operations; or may represent interconnected logic circuits, modules, and functions; or may represent a combination of program operations and logic circuits, modules, and functions. The computer program may be stored in the memory. The memory may be of any type suitable for the local technical environment and may be implemented by using any suitable data storage technology, such as, but is not limited to, a Random Access Memory (RAM), a Read-Only Memory (ROM), an optical storage device and system (a digital video disc (DVD) or a compact disc(CD)) and the like. The computer-readable medium may include a non-transitory storage medium. The data processor may be of any type suitable for the local technical environment, such as, but is not limited to, a general computer, a specific computer, a microprocessor, a digital signal processor (DSP), an application specific integrated circuit (ASIC), a field programmable gate array (FPGA), and a processor based on a multi-core processor architecture.

Through exemplary and non-limiting examples, a detailed description of the exemplary embodiments of the present application is provided above. Various modifications and adaptations to the above embodiments may be apparent to those skilled in the relevant art with reference to the accompanying drawings and the appended claims, without departing from the scope of the application. Accordingly, the proper scope of the present application is to be determined according to the claims.

## Claims

1. A wireless signal processing method, comprising:
acquiring configuration information determined by a control device based on frequency band information supported by a current device and operation state information reported by the current device; and
adjusting an operation mode of the current device according to the configuration information, the operation mode corresponding to a propagation direction of a feedback beam.

2. The method of claim 1, wherein the configuration information comprises a preset frequency band, the method further comprises:
before the adjusting an operation mode of the current device according to the configuration information, comparing the preset frequency band with an operation frequency band supported by the current device to obtain a frequency band comparison result; and
in response to the frequency band comparison result indicating that the operation frequency band supported by the current device comprises the preset frequency band, taking the preset frequency band as an operation frequency band of the current device.

3. The method of claim 1, wherein the configuration information further comprises a switch instruction;
the adjusting an operation mode of the current device according to the configuration information comprises:
adjusting the operation mode of the current device according to the switch instruction to obtain an adjusted operation mode; and
performing an operation by using the adjusted operation mode.

4. The method of claim 3, wherein the performing an operation by using the adjusted operation mode comprises:
aiming the propagation direction of the feedback beam at a target terminal according to acquired location information of the target terminal.

5. The method of claim 3, wherein the performing an operation by using the adjusted operation mode comprises:
performing scattering on a wireless signal carried by an incident beam.

6. The method of claim 1, wherein the feedback beam comprises at least one of: a reflected beam, a transmission beam, or a refracted beam.

7. The method of claim 1, wherein the configuration information further comprises an operation parameter;
the operation parameter comprises at least one of phase information, beamforming information, precoding information, configuration indication information, spatial relation information, filtering information, or sounding reference signal (SRS) resource indication information.

8. The method of claim 1, wherein the configuration information further comprises an adjustment time;
the adjusting an operation mode of the current device according to the configuration information comprises:
determining the adjustment time according to an obtained preset delay duration and a current time; and
adjusting the operation mode of the current device according to the adjustment time.

9. The method of claim 1, wherein the acquiring configuration information comprises:
in response to determining that the current device is in a preset time period, acquiring the configuration information.

10. The method of any of claims 1 to 9, wherein the operation state information comprises state information of a power supply,
the method further comprises:
before the acquiring configuration information, acquiring an electric quantity of the power supply of the current device;
in response to determining that the electric quantity of the power supply of the current device is lower than a preset electric quantity threshold, generating the state information of the power supply according to the electric quantity of the power supply of the current device and an identifier of the current device; and
reporting the state information of the power supply to the control device.

11. The method of claim 10, wherein the reporting the state information of the power supply to the control device comprises:
in response to a state query request, for querying a state of the power supply, sent by the control device, feeding back a state query response to the control device, the state query response comprising the state information of the power supply.

12. The method of any of claims 1 to 9, wherein the current device comprises a plurality of processing units, the operation state information further comprising fault state information,
the method further comprises:
before the acquiring configuration information, acquiring a total number of faults representing a total number of processing units with faults;
determining a fault proportion of the current device according to the number of the faults and a total number of processing units in the current device;
generating the fault state information according to the fault proportion and an identifier of the current device; and
sending the fault state information to the control device.

13. The method of claim 12, wherein the sending the fault state information to the control device comprises:
in response to a fault state query request sent by the control device, feeding back a fault state query response to the control device, the fault state query response comprising the fault state information.

14. A wireless signal processing method, comprising:
acquiring operation state information reported by a controlled device and frequency band information supported by the controlled device;
generating configuration information according to the operation state information and the frequency band information supported by the controlled device; and
sending the configuration information to the controlled device, so that the controlled device adjusts an operation mode of the controlled device according to the configuration information, the operation mode corresponding to a propagation direction of a feedback beam.

15. The method of claim 14, wherein the configuration information comprises: a preset frequency band;
the sending the configuration information to the controlled device comprises:
sending the preset frequency band to the controlled device, so that the controlled device determines an operation frequency band of the controlled device according to the preset frequency band and the frequency band information supported by the controlled device.

16. The method of claim 14, wherein the configuration information further comprises a switch instruction configured to switch the operation mode of the controlled device, the operation mode comprising a first operation mode or a second operation mode;
the first operation mode is configured to indicate the controlled device to aim the propagation direction of the feedback beam at a target terminal according to acquired location information of the target terminal, wherein a wireless signal carried by the feedback beam is the same as a wireless signal carried by an incident beam acquired by the controlled device;
the second operation mode is configured to indicate the controlled device to scatter the wireless signal carried by the incident beam.

17. The method of claim 14, wherein the operation state information comprises state information of a power supply,
the method further comprises:
before the generating configuration information according to the operation state information and the frequency band information supported by the controlled device, acquiring the state information of the power supply sent by the controlled device, the state information of the power supply comprising an electric quantity of the power supply of the controlled device; and
in response to determining that the electric quantity of the power supply of the controlled device is lower than a preset electric quantity threshold, generating a switch instruction configured to switch the operation mode of the controlled device.

18. The method of claim 14, wherein the controlled device comprises a plurality of processing units, the operation state information further comprises fault state information;
the method further comprises:
before the generating configuration information according to the operation state information and the frequency band information supported by the controlled device, acquiring the fault state information sent by the controlled device, the fault state information comprising a fault proportion; and
in response to determining that the fault proportion is higher than a fault proportion threshold, generating a switch instruction configured to switch the operation mode of the controlled device.

19. A controlled device, comprising:
a first acquisition module configured to acquire configuration information determined by a control device based on frequency band information supported by a current device and operation state information reported by the current device; and
an adjustment module configured to adjust an operation mode of the current device according to the configuration information, the operation mode corresponding to a propagation direction of a feedback beam.

20. A terminal, comprising:
at least one controlled device of claim 19.

21. A relay device, comprising:
at least one controlled device of claim 19.

22. A control device, comprising:
a second acquisition module configured to acquire operation state information reported by a controlled device and frequency band information supported by the controlled device;
a generation module configured to generate configuration information according to the operation state information and the frequency band information supported by the controlled device; and
a sending module configured to send the configuration information to the controlled device, so that the controlled device adjusts an operation mode of the controlled device according to the configuration information, the operation mode corresponding to a propagation direction of a feedback beam.

23. An electronic device, comprising:
at least one processor; and
a memory having at least one computer program stored thereon, the at least one computer program, executed by the at least one processor, causes the at least one processor to implement the wireless signal processing method according to any one of claims 1 to 18.

24. A computer-readable storage medium having a computer program stored thereon, the computer program, executed by a processor, causes the processor to implement the wireless signal processing method according to any one of claims 1 to 18.
